# EUROPÄISCHE PATENTSCHRIFT

(11) **EP 1 533 185 B1**
(45) Veröffentlichungstag und Bekanntmachung des Hinweises auf die Patenterteilung: **31.12.2014**
(21) Anmeldenummer: 04021661.6
(22) Anmeldetag: 11.09.2004
(51) Int. Cl.: B60R 9/04

(54) **Toleranzausgleichselement**
Tolerance deviation compensation element
Elément de compensation de déviations de tolérance

(30) Priorität: 19.11.2003 DE 10354117
(43) Veröffentlichungstag der Anmeldung: 25.05.2005
(73) Patentinhaber: Süddeutsche Aluminium Manufaktur GmbH, 89558 Böhmenkirch (DE)
(72) Erfinder: Binder, Hans, 89558 Böhmenkirch (DE); Schabel, Wolfgang, 73113 Ottenbach (DE); Binder, Ottmar, 89558 Böhmenkirch (DE)
(74) Vertreter: Grosse, Rainer

(56) Entgegenhaltungen:
- WO-A-03/062016
- DE-A1- 3 121 086
- DE-A1- 3 133 932
- DE-A1- 3 524 558
- DE-A1- 3 932 193
- DE-A1- 4 240 079
- DE-A1- 10 239 022
- DE-C1- 3 736 028
- DE-C1- 19 706 611
- DE-U1- 9 209 769

## Beschreibung

Die Erfindung betrifft eine Distanzvorrichtung zur Überbrückung eines Freiraums zwischen einem Tragteil und einer Dachkarosserie für die Befestigung eines Dachgepäckträgers, einer Dachreling, einer Dachleiste oder dergleichen auf einem Fahrzeugdach gemäß Oberbegriff des Anspruchs 1. Die Erfindung betrifft ferner einen Fahrzeugdachbereich gemäß Anspruch 11 sowie ein Verfahren zur Positionierung und Betätigung der Distanzvorrichtung gemäß Anspruch 13.

Dachgepäckträger, Dachrelings, Dachleisten oder dergleichen werden auf dem Fahrzeugdach eines Fahrzeugs montiert, wobei sie sich nicht an der aus dünnem Blech bestehenden Dachkarosserie abstützen, sondern über eine Distanzvorrichtung mit einem Tragteil verbunden sind. Das Tragteil kann die auftretenden Kräfte aufnehmen, die bei schweren Dachlasten vorliegen und insbesondere in Unfallsituationen (starke Verzögerungen) zu erwarten sind. Das Tragteil ist von außen nicht sichtbar, da es unterhalb des Blechs der Dachkarosserie liegt. Auch vom Innenraum des Fahrzeugs ist das Tragteil nicht sichtbar, da es von der Innenverkleidung (Dachverkleidung) abgedeckt wird. Zwischen der Unterseite der Dachkarosserie und der Oberseite des Tragteils ist ein Freiraum ausgebildet, der aufgrund von Fertigungstoleranzen mehr oder weniger hoch ist. Bei der Montage des Dachgepäckträgers muss gewährleistet werden, dass eine feste Verbindung zum Tragteil besteht, jedoch gleichzeitig kein Druck auf die Dachkarosserie ausgeübt wird, der zu Blechverformungen führen und als störende Verwerfungen erkannt werden würde.

Bekannte Distanzvorrichtungen sind aufwendig zu montieren. So ist es beispielsweise möglich, Distanzstücke in unterschiedlichen Längen zu verwenden, wobei der Monteur jeweils das für die Höhe des vorliegenden Freiraums passende Distanzstück auswählen und dann montieren muss.

Aus der DE 3932193 A1 geht eine Distanzvorrichtung der eingangs genannten Art hervor. Diese bekannte Distanzvorrichtung weist eine Gewindeaufnahmebuchse auf, die mit einem Bauteil eines Fahrzeugdachs verschweißt wird. In die Gewindeaufnahmebuchse lässt sich eine Gewindeeinstellbuchse einschrauben, um eine Überbrückungslänge einzustellen. Die Gewindeeinstellbuchse wird von außen her dem Fahrzeug zugeführt. Für das Verschrauben von Gewindeeinstellbuchse und Gewindeaufnahmebuchse wird die Gewindeeinstellbuchse um ihre Längsachse gedreht. Anfangs tritt dabei ein Blechlappen des Fahrzeugdachs in einen Schrägschlitz eines Anlageflansches der Gewindeeinstellbuchse ein. Für das Drehen der Gewindeeinstellbuchse sind Nuten in einem Umfangsreich eines Innengewindes der Gewindeeinstellbuchse vorgesehen, in die ein Werkzeug eingesteckt wird.

Der Erfindung liegt die Aufgabe zugrunde, eine Distanzvorrichtung anzugeben, die sehr einfach zu montieren und vielseitig verwendbar ist, wobei die Montage bevorzugt auch durch ungeschultes Personal problemlos erfolgen kann.

Zur Lösung dieser Aufgabe werden unter Berücksichtigung der Merkmale des Oberbegriffs des Anspruchs 1 die kennzeichnenden Merkmale des Anspruchs 1 verwendet. Die Distanzvorrichtung weist ein Stützteil und ein Gegenstützteil auf, wobei Stützteil und Gegenstützteil über eine Schraubverbindung aneinander gehalten und relativ zueinander zur Einstellung der Überbrückungslänge verstellbar sind, wobei das Stützteil und/oder das Gegenstützteil einen innenliegenden Verstellwerkzeug-Angriffssitz für ein die Einstellung der Überbrückungslänge dienendes Verstellwerkzeug aufweist. Unter "innenliegenden Verstellwerkzeug-Angriffssitz" ist erfindungsgemäß ein Sitz für ein Verstellwerkzeug zu verstehen, der nicht an der Peripherie der Distanzvorrichtung liegt oder diese Peripherie überragt, sondern so angeordnet ist, dass das Verstellwerkzeug an innenliegenden Teilen der Distanzvorrichtung angreift und insoweit auch selber die genannte Peripherie nicht oder -im Bereich eines Teilumfangs- nur unwesentlich überragt. Auf diese Art und Weise ist es möglich, die Distanzvorrichtung von der Innenseite des Fahrzeugs her, also von der Fahrgastzelle her zwischen Tragteil und Dachkarosserie zu montieren. Ist dies erfolgt, kann eine ebenfalls vom Innenraum des Fahrzeugs her erfolgende Verschraubung zur Festlegung des Dachgepäckträgers oder dergleichen durchgeführt werden, wobei diese sich einerseits am Tragteil abstützt und andererseits in ein entsprechendes, dem Dachgepäckträger zugeordnetes Gewinde eingeschraubt wird. Die Distanzvorrichtung überbrückt den Freiraum zwischen Tragteil und Dachkarosserie und ist in der Lage, an dem Dachgepäckträger durch die Montage oder Benutzung auftretende Kräfte in das Tragteil abzuleiten, ohne dass die Dachkarosserie dabei verformt oder unzulässig beaufschlagt wird.

Vorteilhafte Ausgestaltungen der Distanzvorrichtung ergeben sich aus den Unteransprüchen.

Die Erfindung betrifft ferner ein Fahrzeugdachbereich gemäß Anspruch 11 mit einem Tragteil, einer mit Abstand dazu liegenden und dadurch einen Freiraum zum Tragteil ausbildenden Dachkarosserie und der, der Überbrückung des Freiraums dienenden Distanzvorrichtung für die Befestigung des Dachgepäckträgers, der Dachreling, der Dachleiste oder dergleichen auf dem Fahrzeugdach, wobei das Tragteil einen sich in der Breite verjüngenden Durchbruch aufweist, dessen maximale Breite den Durchtritt der Distanzvorrichtung zulässt und dessen verjüngte Breite den Durchtritt verwehrt. Hierdurch kann die Distanzvorrichtung vom Fahrzeuginnenraum her durch den entsprechend breiten Bereich des Durchbruchs in den Freiraum eingeschoben werden. Ist dies erfolgt, wird die Distanzvorrichtung seitlich im Freiraum verlagert, also gegenüber der zuvor erwähnten Einschiebbewegung quer dazu bewegt, und zwar derart, dass die Distanzvorrichtung in den in der Breite verjüngten Bereich des Durchbruchs gelangt, so dass sie sich auf den Randbereichen des Durchbruchs abstützen kann, da diese verjüngte Breite den Durchtritt zurück in den Fahrzeuginnenraum verwehrt. Für das erwähnte axiale Einsetzen der Distanzvorrichtung und der nachfolgend erfolgenden radialen Verlagerung wird insbesondere ein Verstellwerkzeug verwendet, das an dem erwähnten Verstellwerkzeug-Angriffssitz von Stützteil und/oder Gegenstützteil angreift. Am Verstellwerkzeug wird die Distanzvorrichtung axial gehalten. Das Verstellwerkzeug erlaubt die Handhabung/Manipulation der Distanzvorrichtung, d. h., mit dem Verstellwerkzeug lässt sich die Distanzvorrichtung vom Fahrzeuginneren her in den Freiraum axial einbringen und dort radial verlagern. Die Begriffe "axial" und "radial" sind auf die Drehachse der Gewindeverbindung zwischen dem Stützteil und dem Gegenstützteil bezogen. Ferner ist es möglich, nur durch Betätigung des in das Fahrzeuginnere ragenden Abschnitts des Verstellwerkzeugs Stützteil und Gegenstützteil relativ zueinander zu verdrehen, um die Überbrückungslänge so einzustellen, dass sich das Stützteil am Tragteil und das Gegenstützteil an der Dachkarosserie abstützt. Um die vorstehenden Montagearbeiten durchführen zu können, nimmt das Verstellwerkzeug die Distanzvorrichtung selbsthaltend auf und weist Drehübertragungsmittel auf, um die Relativdrehung zwischen Stützteil und Gegenstützteil zu ermöglichen.

Vorteilhafte Weiterbildungen des Fahrzeugdachbereichs ergeben sich aus den Unteransprüchen.

Die Erfindung betrifft ferner ein Verfahren zur Positionierung und Betätigung der Distanzvorrichtung gemäß Anspruch 13, die in den Freiraum zwischen dem Tragteil und der Dachkarosserie für die auf dem Fahrzeugdach erfolgende Befestigung des Dachgepäckträgers, der Dachreling, der Dachleiste oder dergleichen eingebracht wird, wobei das Einbringen durch einen Durchbruch des Tragteils vom Innenraum des Fahrzeug her erfolgt.

Vorteilhafte Weiterbildungen des Verfahrens ergeben sich aus den Unteransprüchen.

Die Zeichnungen veranschaulichen die Erfindung anhand eines Ausführungsbeispiels und zwar zeigt:
- Figur 1: einen Längsschnitt durch eine Distanzvorrichtung mit Gewindeschraube zur Dachgepäckträger-, Dachreling oder Dachleistenbefestigung,
- Figur 2: eine perspektivische Ansicht eines Fahrzeugdachbereichs in aufgeschnittenem Zustand,
- Figur 3: die Darstellung der Figur 2, jedoch mit eingesetzter Distanzvorrichtung,
- Figur 4: eine perspektivische Ansicht aus dem Innenraum eines Fahrzeugs, insbesondere Kraftfahrzeugs, heraus, mit in Explosionsdarstellung dargestellter Distanzvorrichtung nebst Unterlegscheibe und Gewindeschraube sowie Dachleiste,
- Figuren 5 bis 7: perspektivische Ansichten betreffend den mit einem Verstellwerkzeug erfolgenden Einbau der Distanzvorrichtung in einen Freiraum zwischen Dachkarosserie des Fahrzeugs und Tragteil des Fahrzeugs und
- Figur 8: eine perspektivische, aufgeschnittene Querschnittsansicht des mit Distanzvorrichtung und Dachleiste versehenen Fahrzeugdachbereichs.

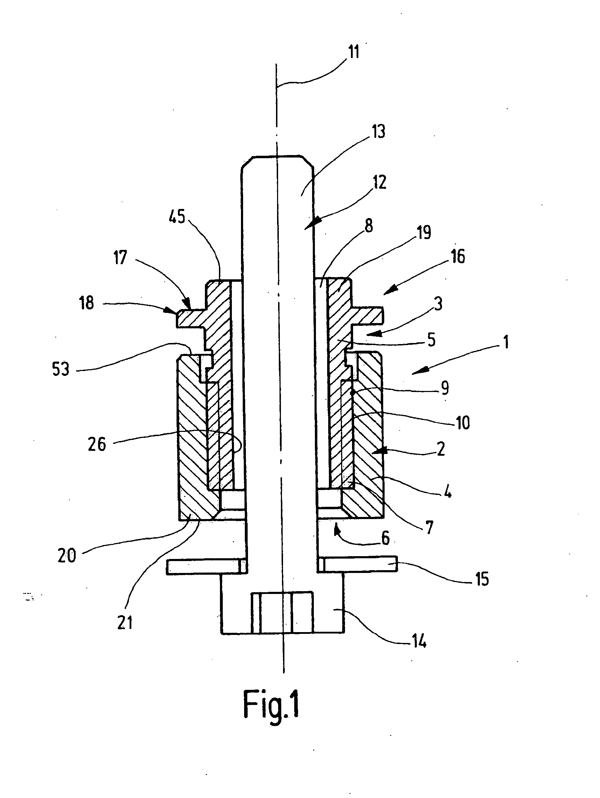

Die Figur 1 zeigt eine Distanzvorrichtung 1, die der Montage einer Dachleiste auf einem Fahrzeugdach dient.

Die Distanzvorrichtung 1 weist ein Stützteil 2 und ein Gegenstützteil 3 auf. Das Stützteil 2 ist als Außenhülse 4 und das Gegenstützteil 3 als Innenhülse 5 ausgebildet. Die Außenhülse 4 weist eine axiale Durchgangsbohrung 6 mit Innengewinde 7 auf. Die Innenhülse 5 ist mit einem axialen Durchgangskanal 8 versehen. An ihrer Außenmantelfläche 9 trägt die Innenhülse 5 ein Außengewinde 10.

Innengewinde 7 und Außengewinde 10 sind ineinander verschraubt, das heißt, die Innenhülse 5 ist in die Außenhülse 4 axial eingeschraubt. Die axiale Richtung ist in der Figur 1 mit der Mittellinie 11 gekennzeichnet.

Wie aus der Figur 1 ersichtlich, wird der Durchgangskanal 8 sowie ein entsprechender Anteil der Durchgangsbohrung 6 von einem Schaft 13 einer Gewindeschraube 12 durchsetzt. Dem Kopf 14 der Gewindeschraube 12 ist eine im Durchmesser relativ große Unterlegscheibe 15 zugeordnet.

Wie aus der Figur 1 ersichtlich, ragt das Gegenstützteil 3 ein Stück weit aus dem Stützteil 2 heraus. Dies ist auch dann der Fall, wenn beide Teile so weit wie möglich miteinander verschraubt sind und resultiert daraus, dass das Gegenstützteil 3 im Bereich des herausragenden Endes 16 eine Dachkaraosserie-Anlagefläche 17 in Form eines Kragens 18 aufweist, der das Außengewinde 10 radial überragt und etwa einen Durchmesser aufweist, der dem Außendurchmesser der Außenhülse 4 entspricht. Der Kragen 18 wird von einem Hohlstutzen 19 axial überragt, der einstückig am Gegenstützteil 4 ausgebildet und von dem Durchgangskanal 8 mitdurchsetzt wird. Die Außenhülse 4 weist auf ihrer dem Schraubenkopf 14 zugewandten, also dem Kragen 18 abgewandten Seite eine Stirnfläche 20 auf, die eine Tragteil-Anlagefläche 21 bildet.

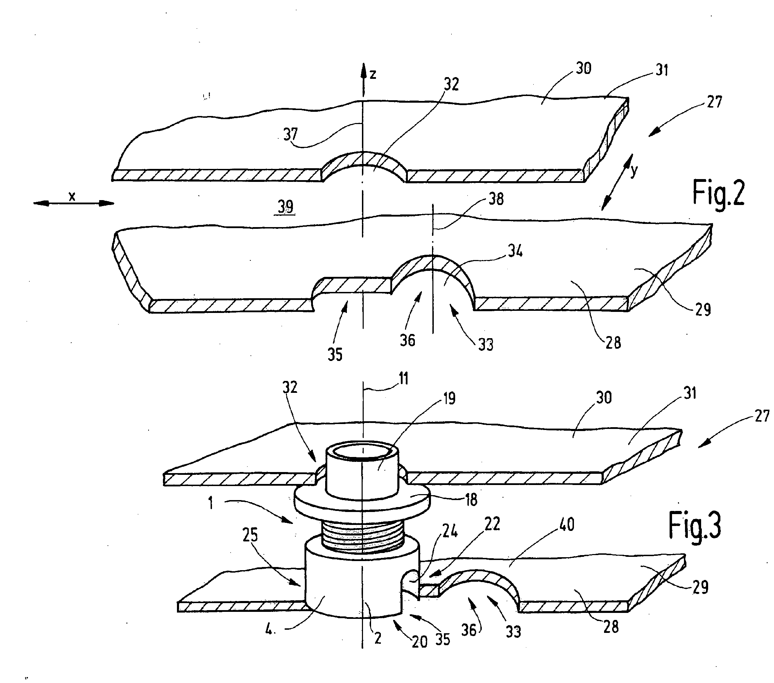

Sowohl am Stützteil 2 als auch am Gegenstützteil 3 ist jeweils ein Verstellwerkzeug-Angriffssitz 22, 23 ausgebildet, wobei sich der Verstellwerkzeug-Angriffssitz 22 am Stützteil 2 und der Verstellwerkzeug-Angriffssitz 23 am Gegenstützteil 3 befindet. Der Figur 3 ist zu entnehmen, dass der Verstellwerkzeug-Angriffssitz 22 als zur Stirnfläche 20 des Stützteils 2 randoffene Hülsenwandausnehmung 24 ausgebildet ist. Diese Hülsenwandausnehmung 24 kann radial die gesamte Wandstärke der Außenhülse 4 durchsetzen. Insbesondere ist vorgesehen, dass diametral zur Mittellinie 11 in der Wandung der Außenhülse 4 eine weitere Hülsenwandausnehmung liegt, die aus der Figur 3 aufgrund der vorliegenden Drehstellung der Außenhülse 4 nicht ersichtlich ist, jedoch mit einem Pfeil 25 angedeutet wird. Der Verstellwerkzeug-Angriffssitz 23 ist an der Innenhülse 5, und zwar in Form des Durchgangskanals 8 beziehungsweise einem Wandabschnitt 26 des Durchgangskanals 8 ausgebildet. Es ist also mittels eines nachstehend noch näher zu beschreibenden Verstellwerkzeugs möglich, sich entlang der Mittellinie 11 der Stirnfläche 20 der Distanzvorrichtung 1 mit einem Verstellwerkzeug zu nähern, wobei das Verstellwerkzeug einen Haltedorn aufweist, der in den Durchgangskanal eingreift. Ferner weist das Verstellwerkzeug einen relativ zum Haltedorn drehbaren Anschlag auf, der von der Stirnfläche 20 her in mindestens eine der Hülsenwandausnehmungen 24 axial eingeschoben wird. Die Anordnung ist dabei so getroffen, dass das Verstellwerkzeug -zumindest im der Distanzvorrichtung 1 zugekehrten Bereich- die um die Mittellinie 11 herumliegende Peripherie der Distanzvorrichtung 1 nicht radial überragt, um die Montage der Distanzvorrichtung 1 vornehmen zu können. Hierauf wird nachstehend noch näher eingegangen. Es ist möglich, dass der Eingriff des Haltedorns des Verstellwerkzeugs reibschlüssig im Durchgangskanal 8 erfolgt. Dies ist beispielsweise dadurch gegeben, dass aus dem Haltedorn seitlich ein federbelastetes Druckteil austritt, das -beim Einschieben in den Durchgangskanal 8- entsprechend weit einfedert und daher eine Reibkraft bei einer Drehung des Verstellwerkzeugs um die Mittellinie 11 herum überträgt. Im vorstehend genannten Fall kann der Durchgangskanal 8 als Zylinderbohrung ausgebildet sein. Alternativ ist es auch möglich, dass der Haltedorn -im Querschnitt gesehen- nicht rotationssymmetrisch, sondern beispielsweise als Vieleck ausgebildet ist, wobei der Querschnitt des Durchgangskanals 8 eine entsprechende Form aufweist, sodass eine Drehmitnahme erfolgen kann.

Die Figur 2 zeigt einen Fahrzeugdachbereich 27 eines nicht näher dargestellten Fahrzeugs. Der Fahrzeugdachbereich 27 weist ein Tragteil 28 in Form eines stabilen Bleches 29 auf und -in Z-Richtung beabstandet davon- eine Dachkarosserie 30, also das am Fahrzeug von außen sichtbare, lackierte Dachblech 31. Der in Z-Richtung vorliegende Abstand zwischen diesen beiden Blechen kann im Zuge der Fertigung aufgrund von Fertigungstoleranzen schwanken. Das Tragteil 28 ist vom Innenraum des Fahrzeugs aus nicht sichtbar, da es durch die Dachverkleidung (Himmel) abgedeckt wird. Die Dachkarosserie 30 wird von einer kreisförmigen Öffnung 32 durchsetzt. Unterhalb dieser Öffnung 32 befindet sich im Tragteil 28 ein sich verjüngender Durchbruch 33, der als Schlüssellochöffnung 34 ausgebildet ist. Die Anordnung ist derart getroffen, dass die verjüngte Breite 35 in Z-Richtung gesehen unterhalb der Öffnung 32 liegt und dass sich die größere, maximale Breite 36 des Durchbruchs 33 in X-Richtung versetzt zur durch den Mittelpunkt der kreisförmigen Öffnung 32 verlaufenden Z-Achse befindet. Die Z-Achse ist in der Figur 2 mit der Linie 37 und der Mittelpunkt der maximalen Breite 36 des Durchbruchs 33 mit der Linie 38 angedeutet. Zwischen der Dachkarosserie 30 und dem Tragteil 28 ist aufgrund des Abstandes dieser beiden Bauteile ein Freiraum 39 ausgebildet, der -wie nachstehend näher dargelegt werden wird- von der Distanzvorrichtung 1 überbrückt wird. Diese Überbrückung geht aus der Figur 3 hervor, das heißt, die Distanzvorrichtung 1 befindet sich dort im Freiraum 29, wobei sie mit einem Ende in die Öffnung 32 eingreift und sich mit ihrem anderen Ende auf der Innenseite 40 des Tragteils 28 abstützt. Auf das Einbringen der Distanzvorrichtung 1 in den Freiraum 39 wird nachfolgend genauer eingegangen. In den Figuren 2 und 3 sind die Bleche 29 und 31 aufgeschnitten dargestellt, sodass jeweils nur Teile der Öffnung 32 und des Durchbruchs 33 erkennbar sind. Tatsächlich handelt es sich bei der Öffnung 32 um eine kreisförmige Öffnung und bei dem Durchbruch 33 um eine Schlüssellochöffnung 34.

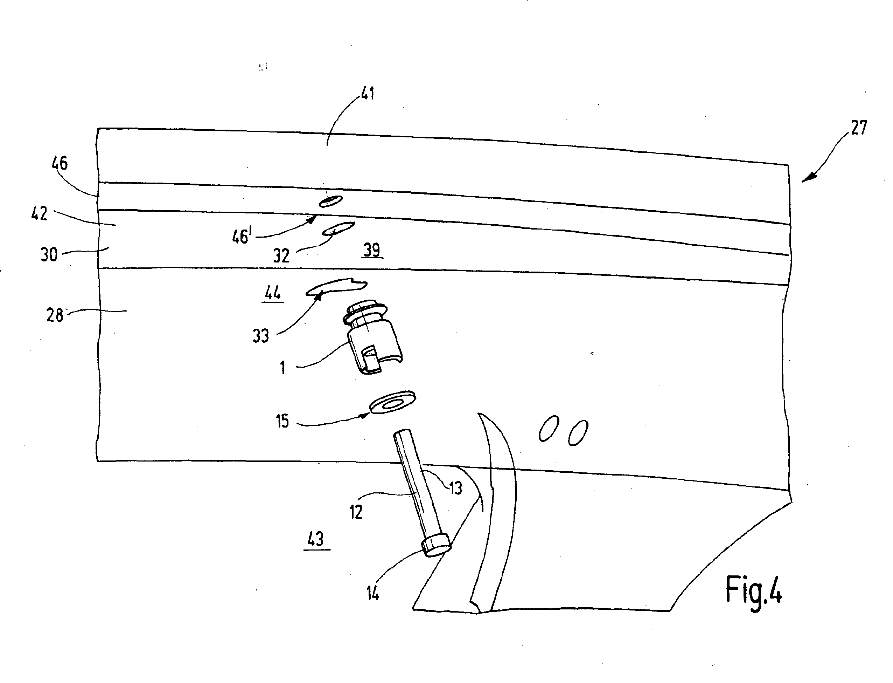

Die Figur 4 verdeutlicht die Montage einer Dachleiste 41 auf dem Dach 42 eines nicht näher dargestellten Kraftfahrzeuges. Das Dach 42 wird von der aus den Figuren 2 und 3 hervorgehenden Dachkarosserie 30 gebildet. Vom Fahrzeuginnenraum 43 aus gesehen liegt unterhalb der Dachkarosserie 30 das bereits erwähnte Tragteil 28, wobei zu diesem Tragteil 28 aufgrund der noch nicht montierten Dachverkleidung Zugriff besteht. Die Figur 4 zeigt lediglich einen Teilabschnitt des Fahrzeugdachbereichs 27, also auch nur einen Abschnitt der auf dem Dach zu montierenden Dachleiste 41.

Für die Montage der aus der Figur 4 hervorgehenden Distanzvorrichtung 1 ist diese vom Innenraum 43 aus durch den Durchbruch 33 hindurch in den Freiraum 39 einzubringen. Anschließend wird dann mittels der Gewindeschraube 12 die Dachleiste 41 festgeschraubt. Hierbei stützt sich die Unterlegscheibe 15 an der Unterseite 44 des Tragteils 28 ab. Der Schaft 13 der Gewindeschraube 12 durchgreift -wie aus Figur 1 ersichtlich- die Durchgangsbohrung 6 sowie den Durchgangskanal 8 der Distanzvorrichtung 1. Mit dem Hohlstutzen 19 durchgreift die Distanzvorrichtung 1 die Öffnung 32 der Dachkarosserie, wobei die Stirnseite 45 (siehe Figur 1) der Innenhülse 5 gegen die Unterseite 46 der Dachleiste 41 anliegt und eine Abstützung der Stirnfläche 20 der Außenhülse 4 auf der Innenseite 40 des Tragteils 28 erfolgt. Der mit Gewinde versehene Schaft 13 der Gewindeschraube 12 ist in eine Gewindebohrung 46' der Dachleiste 41 eingeschraubt und nimmt daher eine axiale Verspannung der Bauteile vor, wobei zwischen dem Kopf 14 der Gewindeschraube 12 und der Unterseite 46 der Dachleiste 41 eine feste Verspannung vorliegt, ohne dass die Dachkarosserie 30, also das relativ empfindliche, lackierte Dachblech 31 des Kraftfahrzeugs über Gebühr belastet werden würde. Dies deshalb, weil die Stirnseite 45 gegen die Unterseite 46 der Dachleiste 41 anliegt, die Distanzvorrichtung 1 in axialer Richtung nicht komprimierbar ist und daher eine Abstützung der Stirnfläche 20 auf der Innenseite 40 des Tragteils 20 vorliegt und die Unterseite 44 von der Unterlegscheibe 15 und letztere von dem Kopf 14 beaufschlagt ist.

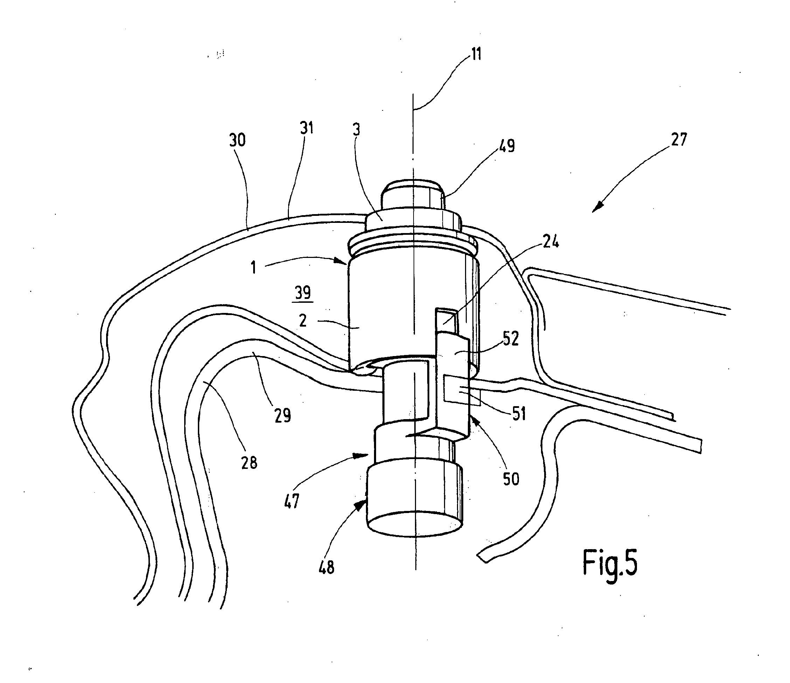

Im Nachstehenden wird darauf eingegangen, wie im Einzelnen dieser Montagezustand hergestellt werden kann. Die Figuren 5 bis 8 zeigen Schnittansichten durch den Fahrzeugdachbereich 27. Ferner ist ein Verstellwerkzeug 47 ersichtlich, das einendig einen Betätigungsabschnitt 48 aufweist und anderendig mit einem Haltedorn 49 versehen ist, der -wie aus der Figur 5 ersichtlich- die Distanzvorrichtung 1 aufnehmen kann, indem sie mit ihrem Durchgangskanal 8 auf den Haltedorn 49 axial (Mittellinie 11) aufgesteckt wird. Hierdurch wird ein Formschluss zwischen Haltedorn 49 und Durchgangskanal 8 und daher dem Gegenstützteil 3 derart erzeugt, dass eine Drehung des Betätigungsabschnitts 48 um die Mittellinie 11 zu einer entsprechenden Drehung des Gegenstützteils 3 um die Mittellinie 11 führt. Relativ zum Haltedorn 49 ist am Verstellwerkzeug 47 ein Anschlag 50 ausgebildet, der -unabhängig von der Drehung des Haltedorns 49 beziehungsweise des Betätigungsabschnitts 48 um die Mittellinie 11 gedreht werden kann. Der Anschlag 50 weist ein sich parallel zum Haltedorn 49 erstreckenden Mitnahmedorn 51 auf, dessen freier Endbereich 52 in eine der Hülsenwandausnehmungen 24 des Stützteils 2 axial einsteckbar ist, wie dies aus der Figur 5 hervorgeht. Der Mitnahmedorn 51 überragt die Peripherie des Stützteils 2 in radialer Richtung nicht.

Die Montage der Distanzvorrichtung 1 erfolgt folgendermaßen: Ein sich im Innenraum 43 des Fahrzeugs befindlicher Monteur steckt auf das Verstellwerkzeug 47 eine Distanzvorrichtung 1 auf, die vollständig zusammengeschraubt ist, das heißt die Unterseite des Kragens 18 liegt auf der Stirnseite 53 der Außenhülse 4 auf oder hat nur geringen Abstand von dieser. Er erfasst anschließend den Betätigungsabschnitt 48 des Verstellwerkzeugs 47 und steckt die Distanzvorrichtung 1 vom Innenraum 43 des Fahrzeugs her in die Schlüssellochöffnung 34 ein, und zwar dort, wo die maximale Breite 36 vorliegt. In dieser Situation befindet sich die Distanzvorrichtung 1 im Hohlraum 39; der Betätigungsabschnitt 48 liegt im Innenraum 43, also unterhalb der Unterseite 44 des Tragteils 28. Nunmehr verschiebt der Monteur vom Innenraum 43 aus mittels des Verstellwerkzeugs 47 die Distanzvorrichtung 1 in X-Richtung in den Bereich der verjüngten Breite 35 der Schlüssellochöffnung 34 derart, dass sich die Stirnfläche 20 auf die Randbereiche des in der Breite verjüngten Durchbruchs 33 aufstützen kann. Diese verjüngte Breite verhindert, dass die Distanzvorrichtung 1 wieder in den Innenraum 43 zurücktreten kann. Da das Verstellwerkzeug 47 entsprechend schlank ausgebildet ist, passt es in die verjüngte Breite 35 des Durchbruchs 33 hinein, ermöglicht also diese radiale Verschiebung im Freiraum 39. Nunmehr verdreht der Monteur -vom Fahrzeuginneren 43 aus- den Betätigungsabschnitt 48 relativ zum Anschlag 50. Der Anschlag 50 kann sich deshalb nicht verdrehen, weil seine Breite etwas kleiner als die verjüngte Breite 35 des Durchbruchs 33 ist. Mithin wird mittels des Mitnahmedorns 51 das Stützteil 2 im Freiraum 39 drehfest gehalten und mittels des Betätigungsabschnitts 48 und dem damit gekoppelten Haltedorn 49 das Gegenstützteil 3 relativ zum Stützteil 2 gedreht, sodass aufgrund der Gewindeverbindung dieser beiden Teile Stützteil 2 und Gegenstützteil 3 axial zueinander auseinanderfahren. Dies erfolgt solange, bis sich die Stirnfläche 20 auf die Innenseite 40 des Tragteils 28 legt und sich die Dachkarosserie-Anlagefläche 17 des Kragens 18 des Gegenstützteils 3 mit leichtem, die Dachkarosserie nicht verformenden Druck an der Unterseite der Dachkarosserie 30 abstützt. Von Vorteil ist es, wenn der Hohlstutzen 19, die Stirnfläche 45 und die Oberseite des Kragens 18 sowie auch die Randperipherie des Kragen 18 mit einer Beschichtung, insbesondere Kunststoffbeschichtung, versehen ist, um die Dachkarosserie 30 zu schonen.

Nunmehr zieht der Monteur das Verstellwerkzeug 47 axial aus der Distanzvorrichtung 1 in Richtung Fahrzeuginnenraum 43 heraus. Die Distanzvorrichtung 1 ist damit vormontiert, sodass nachstehend die Gewindeschraube 12 nebst Unterlegscheibe 15 montiert werden kann, um die erwähnte Dachleiste 41 zu befestigen.

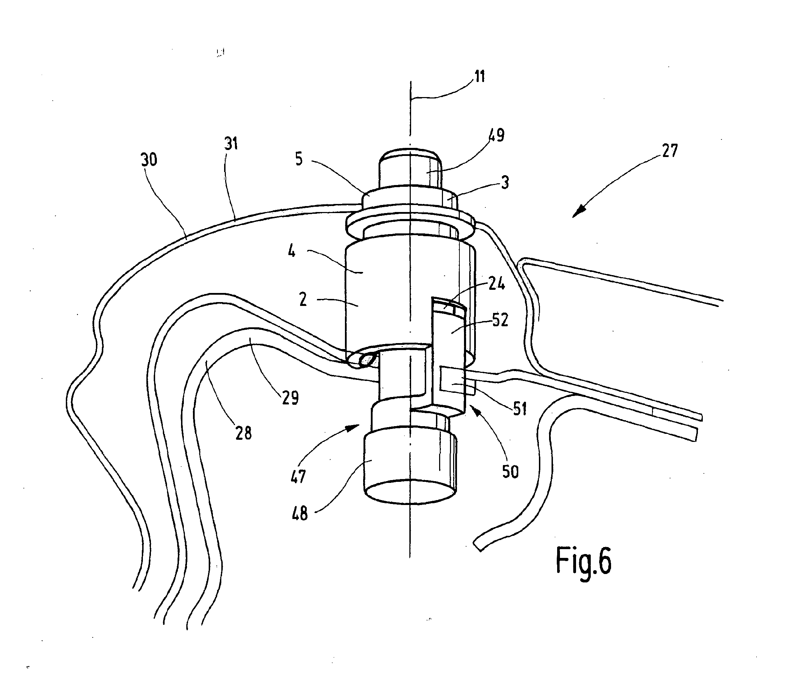

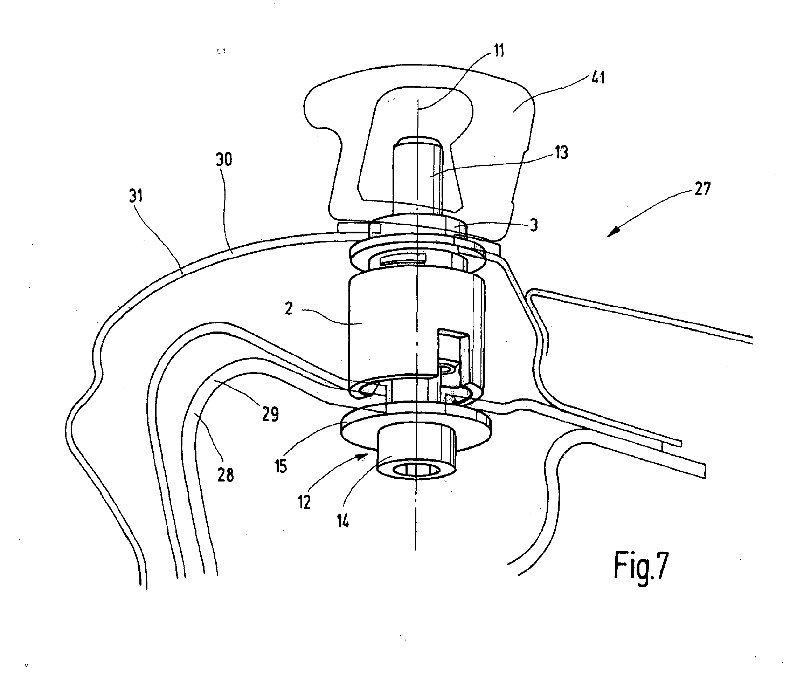

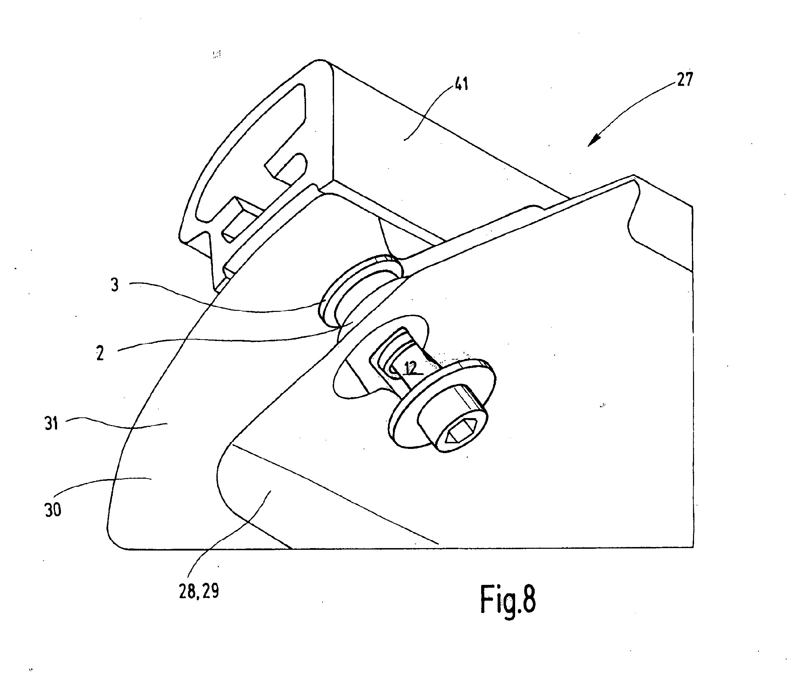

Im Einzelnen zeigt die Figur 5 die mittels Verstellwerkzeug 47 in den Freiraum 39 eingebrachte Distanzvorrichtung, wobei sich letztere noch im zusammengeschraubten Zustand befindet. Die Figur 6 verdeutlicht das axiale Auseinanderschrauben von Stützteil 2 und Gegenstützteil 3 mittels des Verstellwerkzeugs 47. Die Figur 7 zeigt dann den fertig montierten Zustand der Dachleiste 41. Die Figur 8 entspricht der Darstellung der Figur 7, ist jedoch als perspektivische Zeichnung ausgeführt und veranschaulicht daher die Situation.

Es ist verständlich, dass eine Demontage der Distanzvorrichtung 1 ebenfalls problemlos vom Fahrzeuginnenraum 43 aus in entsprechend umgekehrter Reihenfolge der einzelnen Verfahrensschritte durchgeführt werden kann.

Insbesondere kann vorgesehen sein, dass das Auseinanderschrauben von Stützteil 2 und Gegenstützteil 3 dadurch erfolgt, dass auf den Betätigungsabschnitt 48 ein Montagewerkzeug, beispielsweise ein Akkuschrauber, aufgesetzt wird, der eine entsprechend einstellbare Rutschkupplung aufweist, sodass stets ein definiertes Drehmoment ausgeübt wird und daher die Montage der Distanzvorrichtung 1 reproduzierbar erfolgt. Um zu verhindern, dass beim Abziehen des Verstellwerkzeugs 47 eine Gegendrehung im Gegenuhrzeigersinn erfolgt, kann vorgesehen sein, dass das Montagewerkzeug eine Ratsche aufweist, die diese Gegendrehung nicht zulässt.

## Patentansprüche

1. Distanzvorrichtung (1) zur Überbrückung eines Freiraums (39) zwischen einem Tragteil (28) und einer Dachkarosserie (30) für die Befestigung eines Dachgepäckträgers, einer Dachreling, einer Dachleiste oder dergleichen auf einem Fahrzeugdach, mit einem Stützteil (2) und einem Gegenstützteil (3), wobei Stützteil (2) und Gegenstützteil (3) über eine Schraubverbindung aneinander gehalten und relativ zueinander zur Einstellung der Überbrückungslänge verstellbar sind, wobei das Stützteil (2) als mit Innengewinde (7) versehene Außenhülse (4), das Gegenstützteil (3) als mit Außengewinde (10) versehene Innenhülse (5) ausgebildet sind, **dadurch gekennzeichnet, dass** das Gegenstützteil (3) einen zur Gewindeverbindung koaxialen Durchgangskanal (8) für den Eingriff einer den Dachgepäckträger, die Dachreling, die Dachleiste oder dergleichen an dem Tragteil (28) haltenden Gewindeschraube (12) aufweist, und dass das Stützteil (2) mindestens eine zu seiner Stirnfläche (20) randoffene Hülsenwandausnehmung (24) als Verstellwerkzeug-Angriffssitz (22) und das Gegenstützteil (3) einen innenliegenden Verstellwerkzeug-Angriffssitz (23) für ein der Manipulation und/oder der Einstellung der Überbrückungslänge dienenden Verstellwerkzeug (47) aufweist.

2. Distanzvorrichtung nach Anspruch 1, **dadurch gekennzeichnet, dass** der innenliegende Verstellwerkzeug-Angriffssitz (23) an dem Gegenstützteil (3) von dem Durchgangskanal (8) oder einem Wandabschnitt (26) des Durchgangskanals (8) gebildet ist.

3. Distanzvorrichtung nach einem der vorhergehenden Ansprüche, **dadurch gekennzeichnet, dass** die dem Gegenstützteil (3) abgewandte Stirnfläche (20) des Stützteils (2) eine Tragteil-Anlagefläche (21) bildet.

4. Distanzvorrichtung nach einem der vorhergehenden Ansprüche, **dadurch gekennzeichnet, dass** ein vom Stützteil (2) wegragendes Ende (16) des Gegenstützteils (3) eine Dachkarosserie-Anlagefläche (17) aufweist.

5. Distanzvorrichtung nach Anspruch 4, **dadurch gekennzeichnet, dass** die Dachkarosserie-Anlagefläche (17) von einem Kragen (18) des Gegenstützteils (3) gebildet ist.

6. Distanzvorrichtung nach Anspruch 5, **dadurch gekennzeichnet, dass** der Kragen (18) von einem dem Eingreifen in eine Öffnung (32) der Dachkarosserie (30) dienenden Hohlstutzen (19) überragt wird, der von dem Durchgangskanal (8) durchsetzt ist.

7. Distanzvorrichtung nach einem der vorhergehenden Ansprüche, **gekennzeichnet durch** das, dem Verstellwerkzeug-Angriffssitzen (22,23) zuzuordnende Verstellwerkzeug (47).

8. Distanzvorrichtung nach Anspruch 7, **dadurch gekennzeichnet, dass** das Verstellwerkzeug (47) einen in den Durchgangskanal (8) eingreifenden, mit einem Betätigungsabschnitt (48) gekoppelten Haltedorn (49) aufweist.

9. Distanzvorrichtung nach Anspruch 8, **dadurch gekennzeichnet, dass** der Haltedorn (49) im Reibschluss oder im Formschluss mit dem Durchgangskanal (8) kuppelbar ist.

10. Distanzvorrichtung nach einem der vorhergehenden Ansprüche 8 oder 9, **dadurch gekennzeichnet, dass** das Verstellwerkzeug (47) einen relativ zum Haltedorn (49) drehbaren, mit der Hülsenwandausnehmung (24) zusammenwirkenden Anschlag (50) aufweist.

11. Fahrzeugdachbereich (27) mit einem Tragteil (28), einer mit Abstand dazu liegenden und dadurch einen Freiraum (39) zum Tragteil (28) ausbildenden Dachkarosserie (30) und der, der Überbrückung des Freiraums (39) dienenden Distanzvorrichtung (1) nach einem oder mehreren der vorhergehenden Ansprüche für die Befestigung des Dachgepäckträgers, der Dachreling, der Dachleiste oder dergleichen auf dem Fahrzeugdach, **dadurch gekennzeichnet, dass** Tragteil (28) einen sich in der Breite verjüngenden Durchbruch (33) aufweist, dessen maximale Breite den Durchtritt der Distanzvorrichtung (1) zulässt und dessen verjüngte Breite (35) den Durchtritt verwehrt.

12. Fahrzeugdachbereich nach Anspruch 11, **dadurch gekennzeichnet, dass** der Durchbruch (33) eine Schlüssellochform oder etwa eine Schlüssellochform aufweist.

13. Verfahren zur Positionierung und Betätigung der Distanzvorrichtung (1), die in den Freiraum (39) zwischen dem Tragteil (28) und der Dachkarosserie (30) für die auf dem Fahrzeugdach erfolgende Befestigung des Dachgepäckträgers, der Dachreling, der Dachleiste oder dergleichen zur Herstellung des Fahrzeugdachbereichs (27) nach einem oder mehreren der vorhergehenden Ansprüche 11 oder 12 eingebracht wird, **dadurch gekennzeichnet, dass** das Einbringen durch einen Durchbruch (33) des Tragteils (28) vom Innenraum (43) des Fahrzeugs her erfolgt.

14. Verfahren nach Anspruch 13, **dadurch gekennzeichnet, dass** das Einbringen mit dem Verstellwerkzeug (47) nach einem oder mehreren der Ansprüche 7 bis 10 erfolgt.

15. Verfahren nach einem der vorhergehenden Ansprüche 13 oder 14, **dadurch gekennzeichnet, dass** die Distanzvorrichtung (1) in den Freiraum (39) axial eingebracht und anschließend im Freiraum (39) radial verschoben wird.

16. Verfahren nach Anspruch 15, **dadurch gekennzeichnet, dass** nach dem radialen Verschieben die Überbrückungslänge der Distanzvorrichtung (1) mittels des Verstellwerkzeugs (47) eingestellt wird.

## Claims

1. A distance device (1) for bridging a free space (39) between a carrier part (28) and a roof body (30) for fastening a roof luggage rack, a roof rail, a roof strip or the like, on a vehicle roof, comprising a support part (2) and a counter support part (3), wherein support part (2) and counter support part (3) are held together by means of a screw connection and can be adjusted relative to one another for adjusting the bridging length, wherein the support part (2) is embodied as outer sleeve (4), which is provided with internal threads (7), the counter support part (3) is embodied as inner sleeve (5), which is provided with external threads (10), **characterized in that** the counter support part (3) encompasses a passage conduit (8), which is coaxial to the threaded connection, for the engagement of a threaded screw (12), which holds the roof luggage rack, the roof rail, the roof strip or the like on the carrier part (28), and that the support part (2) encompasses at least one sleeve wall recess (24), which has an open edge towards its front surface (20), as adjusting tool contact fit (22) and the counter support part (3) encompasses an adjusting tool contact fit (23) located on the inside, for an adjusting tool (47), which serves the purpose of manipulating and/or adjusting the bridging length.

2. The distance device according to claim 1, **characterized in that** the adjusting tool contact fit (23) located on the inside is formed at the counter support part (3) by the passage conduit (8) or a wall section (26) of the passage conduit (8).

3. The distance device according to any one of the preceding claims, **characterized in that** the front surface (20) of the support part (2), which faces away from the counter support part (3), forms a carrier part contact surface (21).

4. The distance device according to any one of the preceding claims, **characterized in that** an end (16) of the counter support part (3), which projects away from the support part (2), encompasses a roof body contact surface (17).

5. The distance device according to claim 4, **characterized in that** the roof body contact surface (17) is formed by a collar (18) of the counter support part (3).

6. The distance device according to claim 5, **characterized in that** a hollow nozzle (19), which is permeated by the passage conduit (8) and which serves for engaging with an opening (32) of the roof body (30), projects beyond the collar (18).

7. The distance device according to any one of the preceding claims, **characterized by** the adjusting tool (47), which is to be assigned to the adjusting tool contact fits (22, 23).

8. The distance device according to claim 7, **characterized in that** the adjusting tool (47) encompasses a mandrel (49), which engages with the passage conduit (8) and which is coupled to an actuating section (48).

9. The distance device according to claim 8, **characterized in that** the mandrel (49) can be coupled to the passage conduit (8) by means of a frictional connection or by means of a positive locking.

10. The distance device according to any one of the preceding claims 8 or 9, **characterized in that** the adjusting tool (47) encompasses a stop (50), which can be rotated relative to the mandrel (49) and which cooperates with the sleeve wall recess (24).

11. A vehicle roof area (27) comprising a carrier part (28), a roof body (30), which is located at a distance thereto and which thus embodies a free space (39) to the carrier part (28), and the distance device (1) according to any one or a plurality of the preceding claims, which serves to bridge the free space (39), for fastening the roof luggage rack, the roof rail, the roof strip or the like on the vehicle roof, **characterized in that** the carrier part (28) encompasses an aperture (33), which tapers in the width and the maximum width of which allows the distance device (1) to pass and the tapering width (35) of which denies the passage.

12. The vehicle roof area according to claim 11, **characterized in that** the aperture (33) encompasses a keyhole shape or approximately a keyhole shape.

13. A method for positioning and actuating the distance device (1), which is introduced into the free space (39) between the carrier part (28) and the roof body (30) for fastening the roof luggage rack, the roof rail, the roof strip or the like, which is carried out on the vehicle roof, for producing the vehicle roof area (27), according to any one or a plurality of the preceding claims 11 or 12, **characterized in that** the introduction takes place through an aperture (33) of the carrier part (28) from the interior (43) of the vehicle.

14. The method according to claim 13, **characterized in that** the introduction takes place by means of the adjusting tool (47) according to any one or a plurality of claims 7 to 10.

15. The method according to any one of the preceding claims 13 or 14, **characterized in that** the distance device (1) is introduced axially into the free space (39) and is subsequently shifted radially in the free space (39).

16. The method according to claim 15, **characterized in that** the bridging length of the distance device (1) is adjusted by means of the adjusting tool (47) after the radial shifting.

## Revendications

1. Dispositif d'écartement (1) pour combler un espace libre (39) entre une partie porteuse (28) et une carrosserie de toit (30) pour la fixation d'un porte-bagages de toit, d'un longeron de toit, d'un tasseau de toit ou similaire sur un toit de véhicule, avec une partie d'appui (2) et une partie d'appui conjuguée (3), dans lequel la partie d'appui (2) et la partie d'appui conjuguée (3) sont maintenues l'une contre l'autre par le biais d'une connexion vissée et peuvent être déplacées l'une par rapport à l'autre pour le réglage de la longueur de comblement, dans lequel la partie d'appui (2) est réalisée en tant que manchon externe (4) pourvu d'un filetage interne (7), la partie d'appui conjuguée (3) est réalisée en tant que manchon interne (5) pourvu d'un filetage externe (10), **caractérisé en ce que** la partie d'appui conjuguée (3) présente un canal de passage coaxial (8) pour la connexion filetée pour l'engagement d'une vis filetée (12) maintenant le porte-bagages de toit, le longeron de toit, le tasseau de toit ou similaire sur la partie porteuse (28), et que la partie d'appui (2) présente au moins un évidement de paroi de manchon (24) à bord ouvert vers sa face frontale (20) en tant que siège d'entaille d'outil de réglage (22) et la partie d'appui conjuguée (3) présente un siège d'entaille d'outil de réglage interne (23) pour un outil de réglage (47) servant à la manipulation et/ou au réglage de la longueur de comblement.

2. Dispositif d'écartement selon la revendication 1, **caractérisé en ce que** le siège d'entaille d'outil de réglage interne (23) est formé sur la partie d'appui conjuguée (3) par le canal de passage (8) ou une section de paroi (26) du canal de passage (8).

3. Dispositif d'écartement selon l'une quelconque des revendications précédentes, **caractérisé en ce que** la face frontale (20) de la partie d'appui (2) détournée de la partie d'appui conjuguée (3) forme une surface de butée de partie porteuse (21).

4. Dispositif d'écartement selon l'une quelconque des revendications précédentes, **caractérisé en ce qu'**une extrémité (16) de la partie d'appui conjuguée (3) saillant à l'écart de la partie d'appui (2) présente une surface de butée de carrosserie de toit (17).

5. Dispositif d'écartement selon la revendication 4, **caractérisé en ce que** la surface de butée de carrosserie de toit (17) est formée par un col (18) de la partie d'appui conjuguée (3).

6. Dispositif d'écartement selon la revendication 5, **caractérisé en ce que** le col (18) est dépassé en hauteur par une tubulure creuse (19) servant à l'engagement dans une ouverture (32) de la carrosserie de toit (30) qui est traversée par le canal de passage (8).

7. Dispositif d'écartement selon l'une quelconque des revendications précédentes, **caractérisé par** l'outil de réglage (47) à associer au siège d'entaille d'outil de réglage (22, 23).

8. Dispositif d'écartement selon la revendication 7, **caractérisé en ce que** l'outil de réglage (47) présente une broche de maintien (49) s'engageant dans le canal de passage (8), raccordée à une section d'actionnement (48).

9. Dispositif d'écartement selon la revendication 8, **caractérisé en ce que** la broche de maintien (49) peut être engrenée par friction ou conjugaison de formes avec le canal de passage (8).

10. Dispositif d'écartement selon l'une quelconque des revendications précédentes 8 ou 9, **caractérisé en ce que** l'outil de réglage (47) présente une butée (50) rotative par rapport à la broche de maintien (49), coopérant avec l'évidement de paroi de manchon (24).

11. Région de toit de véhicule (27) avec une partie porteuse (28), une carrosserie de toit (30) située à écart de celle-ci et réalisant de ce fait un espace libre (39) pour la partie porteuse (28) et le dispositif d'écartement (1) servant à combler l'espace libre (39) selon une ou plusieurs des revendications précédentes pour la fixation du porte-bagages de toit, du longeron de toit, du tasseau de toit ou similaire sur le toit de véhicule, **caractérisée en ce que** la partie porteuse (28) présente un ajour (33) se rétrécissant dans la largeur dont la largeur maximale autorise le passage du dispositif d'écartement (1) et dont la largeur rétrécie (35) empêche le passage.

12. Région de toit de véhicule selon la revendication 11, **caractérisée en ce que** l'ajour (33) présente une forme de trou de serrure ou approximativement une forme de trou de serrure.

13. Procédé de positionnement et d'actionnement du dispositif d'écartement (1) qui est introduit dans l'espace libre (39) entre la partie porteuse (28) et la carrosserie de toit (30) pour la fixation s'effectuant sur le toit de véhicule du porte-bagages de toit, du longeron de toit, du tasseau de toit ou similaire en vue de fabriquer la région de toit de véhicule (27) selon une ou plusieurs des revendications précédentes 11 ou 12, **caractérisé en ce que** l'introduction s'effectue à travers un ajour (33) de la partie porteuse (28) depuis l'habitacle (43) du véhicule.

14. Procédé selon la revendication 13, **caractérisé en ce que** l'introduction s'effectue avec l'outil de réglage (47) selon une ou plusieurs des revendications 7 à 10.

15. Procédé selon l'une quelconque des revendications précédentes 13 ou 14, **caractérisé en ce que** le dispositif d'écartement (1) est introduit axialement dans l'espace libre (39), puis décalé radialement dans l'espace libre (39).

16. Procédé selon la revendication 15, **caractérisé en ce que** la longueur de comblement du dispositif d'écartement (1) après le décalage radial est réglée au moyen de l'outil de réglage (47).
